Europäisches Patentamt

European Patent Office

Office européen des brevets

(19)

(11) Veröffentlichungsnummer: **0 024 607**

**A1**

(12) # EUROPÄISCHE PATENTANMELDUNG

(21) Anmeldenummer: 80104705.1

(22) Anmeldetag: 09.08.80

(51) Int. Cl.³: **G 11 B 3/10**
**G 11 B 3/50**

(30) Priorität: 18.08.79 DE 2933558
14.06.80 DE 3022474

(43) Veröffentlichungstag der Anmeldung:
11.03.81 Patentblatt 81/10

(84) Benannte Vertragsstaaten:
AT BE CH DE FR GB IT LI LU NL SE

(71) Anmelder: Licentia Patent-Verwaltungs-GmbH
Theodor-Stern-Kai 1
D-6000 Frankfurt/Main 70(DE)

(72) Erfinder: Joschko, Günter, Dipl.-Phys.
Silvesterweg 7
D-1000 Berlin 28(DE)

(72) Erfinder: Albrecht, Peter Ing.-(grad).
Strasse 231 Nr. 45
D-1000 Berlin 47(DE)

(74) Vertreter: Einsel, Robert, Dipl.-Ing.
Licentia Patent-Verwaltungs-GmbH Theodor-Stern-Kai 1
D-6000 Frankfurt/Main 70(DE)

(54) Abtastsystem für einen Aufzeichnungsträger mit einer spiralförmigen Rille.

(57) Bei einem Abtastsystem für eine Platte (1) mit einer Rille, z. B. einer PCM-Tonplatte mit Druckabtastung, ist der Abtaster (13) am Ende eines federnden Tragarmes (6) befestigt, der bei der Abtastung radial zur Platte (1) geführt wird. Gemäß der Erfindung ist an dem Tragarm (6) ein zweiter Tragarm (11) gelenkig gelagert. Am ersten Tragarm (6) befindet sich ein reiner Führungskörper (8) und am zweiten Tragarm (11) der eigentliche Abtaster (13). Dadurch wird die Signalabtastung bei Ungenauigkeiten in dem Aufzeichnungsträger (1) wie z.B. Höhen- und Seitenschlägen verbessert.

Fig.1

EP 0 024 607 A1

- 1 -

L i c e n t i a
Patent-Verwaltungs-GmbH
Theodor-Stern-Kai   1

6000   Frankfurt / Main 70


P 29 33 558.8                          Hannover, den 23.06.1980
P 30 22 474.9                          UE2-Wp/rs   H 79/47 Ausl.


Abtastsystem für einen Aufzeichnungsträger mit einer spiralförmigen Rille

Es ist bekannt, ein Ton- oder Bildsignal auf einer spiralförmigen Spur einer Platte aufzuzeichnen. Bei der bekannten Druckabtastung (DE-PS 15 74 489) erfolgt die Aufzeichnung mechanisch in Form von entlang der Spur aufeinanderfolgenden Erhebungen, die durch den lagestarren Abtaster zusammengedrückt werden. Der Abtaster hat hierbei eine Gleitkufe aus Saphir oder Diamant, die durch die Rille der Platte geführt ist und die Druckimpulse auf den Wandler überträgt.

Dabei ist es bekannt (DE-PS 20 29 909), einen in konstanter Höhe zur Platte radial geführten Schlitten vorzusehen und den Abtaster mittels eines federnden Tragarms in senkrechter und waagerechter Richtung federnd an diesem Schlitten zu befestigen. Der Abtaster wird durch die Platte entgegen der

- 2 -

Federkraft des Röhrchens etwas nach oben ausgelenkt, so daß
die Rückstellkraft des federnden Tragarmes die Auflagekraft
des Abtasters auf der Platte bestimmt. Diese Lösung hat den
Vorteil, daß die Rille der Platte eine Feinführung des Abtasters bewirkt, so daß dieser bei Spurabweichungen, z.B.
Exzentrizität der Platte, der Rille folgen kann.

Bei Abtastsystemen dieser Art mit einem mechanisch durch die
Rille geführten Abtaster und einer besonders hohen Rillendichte von etwa 400/mm  tritt das Problem auf, daß der Drehpunkt der Platte nicht genügend genau zentriert zu der Rille
liegt und auch die Planheit der Platte unzureichend ist. Dadurch entstehen Höhen- und Seitenschläge, die an dem im
mechanischen Kontakt mit der Rille stehenden Abtaster zusätzliche Beschleunigungen hervorrufen, die wiederum den sicheren Kontakt zwischen dem Abtaster und der Platte aufheben
können.

Der Erfindung liegt die Aufgabe zugrunde, ein Abtastsystem zu
schaffen, bei dem auch bei Ungenauigkeiten in dem Aufzeichnungsträger wie z.B. Höhen- und Seitenschlägen eine einwandfreie Abtastung erfolgt und das gewonnene Signal weitestgehend unverfälscht ist.

Diese Aufgabe wird durch die im Anspruch 1 beschriebene Erfindung gelöst. Vorteilhafte Weiterbildungen der Erfindung
sind in den Unteransprüchen beschrieben.

Bei der erfindungsgemäßen Lösung werden also die beiden Funktionen der reinen Führung des Abtastsystems in der Rille und
die der eigentlichen Abtastung zur Signalerzeugung bewußt
voneinander getrennt. Dadurch ergibt sich der Vorteil, daß
die beiden Tragarme für die beiden Aufgaben unabhängig voneinander nach den jeweiligen Gesichtspunkten hinsichtlich der
reinen Führung und der Abtastung zur Signalgewinnung getrennt
voneinander bemessen werden können. Das gilt besonders für die
Auflagekraft und die sogenannte Compliance, d.h. die reziproke Steifigkeit, Nachgiebigkeit oder Auslenkung, z.B. gemessen in mm/mN.

Der erste Tragarm übernimmt lediglich die Aufgabe der Führung des Abtastsystems. Er kann mit einer genügend großen Andruckkraft und zur Schonung des Aufzeichnungsträgers auch mit einer relativ großen Auflagefläche ausgebildet sein. Dadurch wird sichergestellt, daß das Abtastsystem immer in einer exakten Lage in der Rille definiert liegt, und zwar hinsichtlich der Höhenlage und der Seitenlage. Bei dieser Bemessung braucht auf die Signalabtastung keine Rücksicht genommen zu werden, da mit dem Führungskörper am ersten Tragarm keine Abtastung erfolgt und auch kein Signal gewonnen wird.

Der zweite Tragarm kann indessen hinsichtlich seine Compliance entsprechend den Erfordernissen einer optimalen Abtast- und Lebensdauerbedingung hinsichtlich Aufzeichnungsträger und Abtaster bemessen werden. Der Abtaster am Ende des zweiten Tragarmes hat immer die richtige Lage relativ zum Aufzeichnungsträger, da der erste Tragarm und somit auch der zweite Tragarm jeglichen Abweichungen in der Lage der Rille folgt. Wenn z.B. der Aufzeichnungsträger durch einen Höhenschlag nach oben ausweicht, so wird auch der erste Tragarm entsprechend angehoben. Dadurch wird auch der am ersten Tragarm befestigte zweite Tragarm um etwa denselben Betrag angehoben, so daß die relative Lage zwischen dem Abtaster am Ende des zweiten Tragarms und der Rille selbst erhalten bleibt. Praktische Versuche haben gezeigt, daß mit der erfindungsgemäßen Lösung die Abweichungen in der relativen Lage zwischen dem Abtaster zur Signalgewinnung und der Rille auf 10% des ursprünglichen Wertes verringert werden konnten. Mit der erfindungsgemäßen Lösung lassen sich für den Abtaster selbst Compliance-Werte erreichen, die mit bisherigen Abtastsystemen nicht erreichbar waren.

Die Erfindung ist anwendbar unabhängig von der Art der Aufzeichnung des Signals auf dem Aufzeichnungsträger und der Art der Abtastung. Diese können mechanisch nach dem Prinzip der Druckabtastung, nach dem Prinzip der mechanischen Bewegungsabtastung, kapazitiv oder optisch erfolgen.

Ausführungsbeispiele der Erfindung werden im folgenden anhand der Zeichnung erläutert. Darin zeigen

Figur 1 ein erstes Ausführungsbeispiel,

Figur 2 die Anordnung nach Figur 1 in einer anderen Ansicht und in vergrößerter Darstellung,

Figur 3 ein weiteres Ausführungsbeispiel der Erfindung,

Figur 4,5 eine Weiterbildung der Erfindung in zwei Ansichten und

Figur 6 eine vergrößerte Darstellung des Abtastsystems nach Figur 4,5.

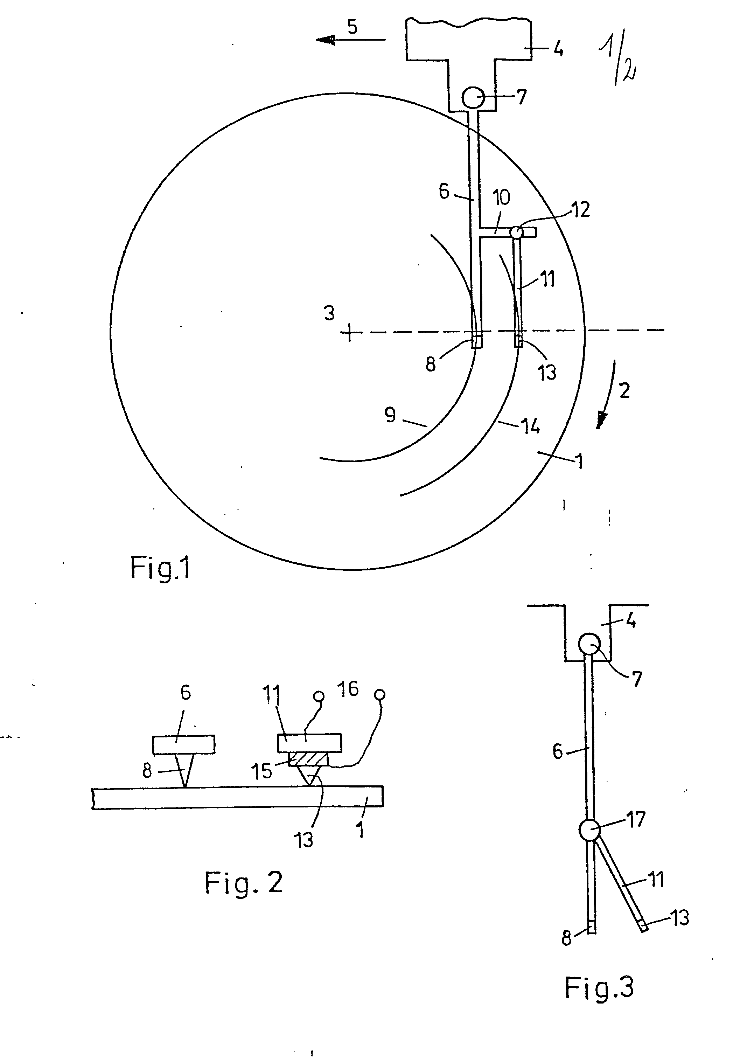

In Figur 1 rotiert die Platte 1, auf der ein Bildsignal oder ein PCM-Tonsignal nach dem Prinzip der Druckabtastung aufgezeichnet ist, in Richtung 2 um ihren Mittelpunkt 3. Es ist ein Abtastergehäuse 4 vorgesehen, das beim Abtastvorgang durch einen nicht näher dargestellten Schlitten in Radialrichtung 5 bewegt wird. An dem Gehäuse 4 ist der erste Tragarm 6 über das Gelenk 7 in Horizontal- und Vertikalrichtung federnd gelagert. Am Ende des ersten Tragarmes 6 befindet sich der Führungskörper 8, der durch den Rillenabschnitt 9 geführt wird. Der Führungskörper 8 und seine Auflagekraft auf der Platte 1 sind so gewählt, daß der Führungskörper 8 auch bei Höhen- und Seitenschlägen stets in dem Rillenabschnitt 9 bleibt, so daß der Tragarm 6 durch die Platte 1 geführt wird.

An dem Tragarm 6 ist der starre Ausleger 10 befestigt. In dem Ausleger 10 ist der zweite Tragarm 11 über das Gelenk 12 gelagert und hat somit gegenüber dem Tragarm 6 eine Compliance in horizontaler und vertikaler Richtung. Am Ende des zweiten Tragarmes 11 befindet sich der eigentliche Abtaster 13 und der damit gekuppelte mechanisch-elektrische Wandler zur Erzeugung des abgetasteten Signals. Der Abtaster 13 gleitet in dem Rillenabschnitt 14. Der Führungskörper 8 und der Abtaster 13 haben einen Abstand bis zu 3 mm.

Die Compliance-Werte der beiden Tragarme 6,11 seien folgendermaßen definiert.

$C_{1H}$: Compliance des Tragarms 6 relativ zum Gehäuse 4 in horizontaler Richtung.

$C_{1V}$: Compliance des Tragarms 6 relativ zum Gehäuse 4 in vertikaler Richtung.

$C_{2H}$: Compliance des Tragarms 11 gegenüber dem Tragarm 6 in horizontaler Richtung.

$C_{2V}$: Compliance des Tragarms 11 gegenüber dem Tragarm 6 in vertikaler Richtung.

Die Anordnung ist dabei so bemessen, daß

$$C_{2H} > C_{1H}$$
$$C_{2V} > C_{1V}$$

Das bedeutet, daß die Compliance, d.h. die Nachgiebigkeit des Tragarmes 11 relativ zum Tragarm 6 in beiden Richtungen größer ist als die Compliance des Tragarms 6 relativ zu dem als lagestarr anzusehenden Gehäuse 4.

Figur 2 zeigt den ersten Tragarm 6 mit dem Führungskörper 8, der lediglich zur Führung des Abtastsystems dient. Daneben ist der zweite Tragarm 11 mit dem insbesondere aus Diamant bestehenden Abtaster 13 vorgesehen, dem der mechanisch-elektrische Wandler 15 zugeordnet ist. Dieser liefert an den Ausgangsklemmen 16, die an den unteren und oberen Belag des Wandlers 15 angeschlossen sind, das abgetastete Signal, z.B. in Form eines frequenzmodulierten Trägers.

Figur 3 zeigt eine andere Befestigung des zweiten Tragarmes 11 an dem ersten Tragarm 6. Dort ist der Tragarm direkt über das Gelenk 17 am Tragarm 6 befestigt und bildet mit diesem zusammen einen spitzen Winkel. Der Führungskörper 8 und der Abtaster 13 sind wieder so angeordnet, daß sie beim Abtastvorgang auf einem Radius der Platte 2 liegen.

Bei dem beschriebenen Ausführungsbeispiel liegen der Führungskörper und der Abtaster radial zueinander versetzt und laufen somit in radial voneinander entfernten Rillenabschnitten. Diese Lösung hat noch den Nachteil, daß ein Teil der Fläche des Aufzeichnungsträgers für die Aufzeichnung nicht benutzt werden kann. Wenn z.B. der Abtaster gegenüber dem Führungskörper nach außen radial versetzt ist, muß die Aufzeichnungsfläche in der Mitte der Platte Leerrillen aufweisen, weil die letzten Rillenwindungen nur von dem Führungskörper, jedoch nicht von dem Abtaster durchfahren werden.

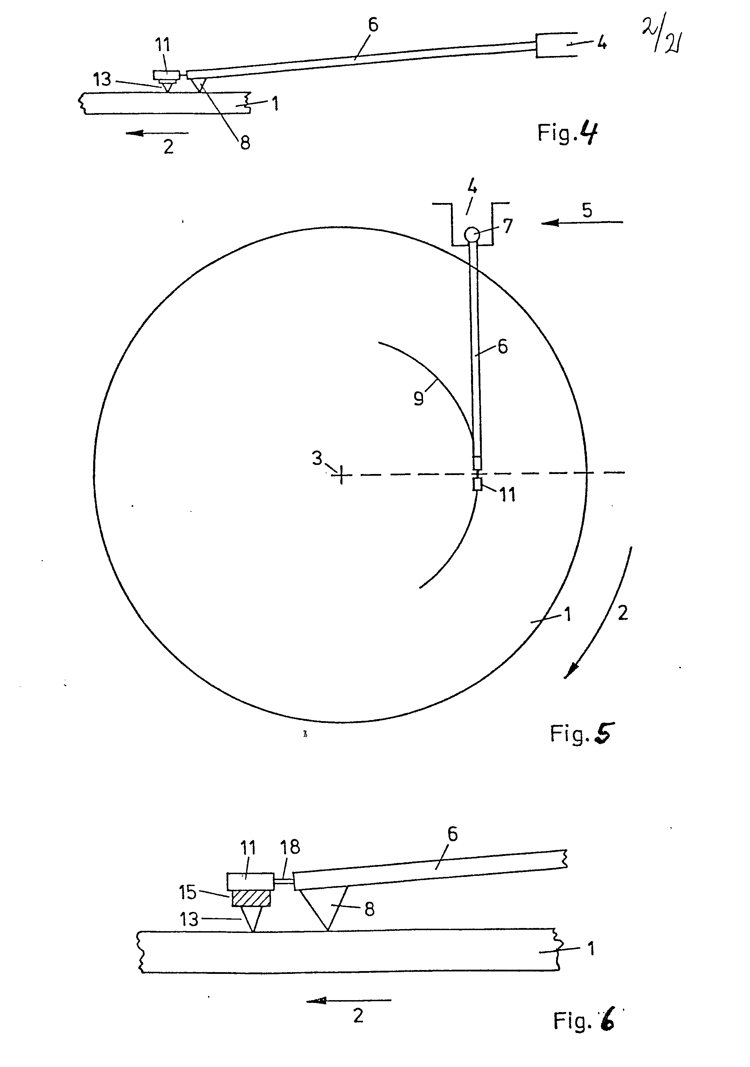

Bei dem Ausführungsbeispiel nach Fig. 4-6 sind derartige Leerrillen ohne Aufzeichnung nicht oder nur im geringen Maße notwendig. Dort wird ein Radialversatz zwischen Führungskörper und Abtaster vermieden. Diese beiden Teile laufen bei der Abtastung in Rillenabschnitten, die nur geringfügig gegeneinander versetzt sind, oder sogar in demselben Rillenabschnitt.

In Figur 4,5 ist in Drehrichtung 2 zum Führungskörper 8 versetzt der zweite Tragarm 11 vorgesehen, an dem der Abtaster 13 befestigt ist. Der Tragarm 11 ist am Tragarm 6 nachgiebig gelagert, und zwar vorzugsweise mit der gleichen Nachgiebigkeit in allen Richtungen. Die Nachgiebigkeit des Tragarms 11 gegenüber dem Gehäuse 4 ist in allen Richtungen größer als die Nachgiebigkeit des Tragarms 6 gegenüber dem Gehäuse 4. Der Führungskörper 8 und der Abtaster 13 laufen in demselben Rillenabschnitt 9 oder in Rillenabschnitten, die nur um ganz geringe Beträge in der Größenordnung von 50 µm radial gegeneinander versetzt sind. Was die Ausnutzung der Oberfläche der Platte 1 betrifft, können Führungskörper 8 und der Abtaster 13 als in demselben Rillenabschnitt laufend angesehen werden. Es besteht praktisch also kein Radialversatz zwischen diesen Teilen, so daß nur wenige Leerrillen auf der Platte 1 vorgesehen sein müssen. Deren Zahl ist u.a. abhängig von dem unvermeidbaren geringen Radialversatz zwischen Führungskörper 8 und Abtaster 13.

Figur 6 zeigt zusätzlich den Wandler 15, der von der Platte 1 auf den Abtaster 13 ausgeübte Druckimpulse in ein elektrisches Signal umwandelt. Der Tragarm 11 ist über den Draht 18 mit dem Stirnende des Tragarms 6 verbunden. Dadurch ergibt sich eine Nachgiebigkeit des Tragarms 11 gegenüber dem Tragarm 6 und dadurch auch gegenüber dem Gehäuse 4, die in allen Richtungen etwa gleich ist. Dieses ist vorteilhaft, damit sich der Abtaster 13 bei Ungenauigkeiten in der Rille mit der gewünschten Nachgiebigkeit sowohl senkrecht als auch waagerecht gegenüber dem Führungskörper 8 bewegen und somit durch die Rille einwandfrei geführt werden kann, ohne in einen benachbarten Rillenabschnitt zu springen.

Anstelle des Drahtes 18 kann auch eine andere nachgiebige Verbindung, z.B. eine Gummi-Verbindung vorgesehen sein. Der Tragarm 11 ist dann z.B. an das Stirnende des Tragarms 6 anvulkanisiert.

- 1 -

L i c e n t i a
Patent-Verwaltungs-GmbH
Theodor-Stern-Kai 1

6000  Frankfurt / Main 70

P 29 33 558.8                      Hannover, den 23.06.1980
P 30 22 474.9                      UE2-Wp/rs   H 79/47 Ausl.


<u>Patentansprüche</u>


1. Abtastsystem für einen Aufzeichnungsträger mit einer spiralförmigen Rille, insbesondere für eine Bild- oder Schallplatte,
mit einem durch die Rille geführten Führungskörper (8), der
am Ende eines gelenkig am Abtastergehäuse (4) gelagerten
Tragarms (6) befestigt ist, <u>dadurch gekennzeichnet</u>, daß der
Abtaster (13) für die aufgezeichnete Information und der zugehörige Wandler (15) am Ende eines zweiten Tragarms (11)
befestigt sind, der gelenkig am ersten Tragarm (6) gelagert
ist.


2. System nach Anspruch 1, <u>dadurch gekennzeichnet</u>, daß die
Enden der beiden Tragarme (6,11) auf einer Radiallinie
des Aufzeichnungsträgers (1) gegeneinander versetzt liegen.


3. System nach Anspruch 2, <u>dadurch gekennzeichnet</u>, daß das

- 2 -

Maß der Versetzung $\leq$ 3 mm ist.

4. System nach Anspruch 1, <u>dadurch gekennzeichnet</u>, daß der zweite Tragarm (11) gelenkig an einem am ersten Tragarm (6) befestigten starren Ausleger (10) gelagert ist.

5. System nach Anspruch 3, <u>dadurch gekennzeichnet</u>, daß der Ausleger (10) senkrecht zum ersten Tragarm (6) gerichtet ist.

6. System nach Anspruch 1, <u>dadurch gekennzeichnet</u>, daß der zweite Tragarm (11) parallel zum ersten Tragarm (6) verläuft.

7. System nach Anspruch 1, <u>dadurch gekennzeichnet</u>, daß der zweite Tragarm (11) unmittelbar am ersten Tragarm (6) angelenkt ist und mit diesem einen spitzen Winkel bildet (Fig. 3).

8. System nach Anspruch 1, <u>dadurch gekennzeichnet</u>, daß die Compliance bei den beiden Tragarmen (6,11) unterschiedlich bemessen ist.

9. System nach Anspruch 1, <u>dadurch gekennzeichnet</u>, daß die Compliance des zweiten Tragarmes (11) relativ zum ersten Tragarm (6) in Horizontalrichtung und Vertikalrichtung größer ist als die Compliance des ersten Tragarms (6) relativ zum Abtastergehäuse (4).

10. System nach Anspruch 1, <u>dadurch gekennzeichnet</u>, daß die Compliance des zweiten Tragarms (11) in horizontaler und vertikaler Richtung unterschiedlich bemessen ist.

11. System nach Anspruch 1, <u>dadurch gekennzeichnet</u>, daß der Führungskörper (8) und der Abtaster (13) in Richtung der Rille hintereinander liegen (Fig. 4-6).

12. System nach Anspruch 11, <u>dadurch gekennzeichnet</u>, daß der Abtaster (13) gegenüber dem Führungskörper (8) in Drehrichtung (2) des Aufzeichnungsträgers (1) versetzt liegt.

13. System nach Anspruch 11, <u>dadurch gekennzeichnet</u>, daß der zweite Tragarm (11) am Stirnende des ersten Tragarms (6) befestigt ist.

14. System nach Anspruch 11, <u>dadurch gekennzeichnet</u>, daß der zweite Tragarm (11) gegenüber dem ersten Tragarm (6) in allen Richtungen etwa die gleiche Nachgiebigkeit aufweist.

15. System nach Anspruch 14, <u>dadurch gekennzeichnet</u>, daß der zweite Tragarm (11) über einen Draht (18) mit dem ersten Tragarm (6) verbunden ist.

16. System nach Anspruch 14, <u>dadurch gekennzeichnet</u>, daß der zweite Tragarm (11) an den ersten Tragarm (6) anvulkanisiert ist.

0024607

Fig.1

Fig. 2

Fig.3

H79/47 -

Fig.4

Fig.5

Fig.6

Europäisches Patentamt

# EUROPÄISCHER RECHERCHENBERICHT

**0024607**

Nummer der Anmeldung

EP 80 10 4705.1

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A1 - 2 812 993 (RCA) <br> * Ansprüche 1, 2; Fig. 2 * <br> -- | 1,2, <br> 5,6 |
| | US - A - 2 328 862 (SOUNDSCRIBER CORP.) <br> * Anspruch 1; Seite 1, linke Spalte, <br> Zeilen 5 bis 51 * <br> -- | 1,2 |
| A | DE - A - 2 128 589 (OPTRIC GLARUS AG) <br> * Anspruch 1 * <br> ---- | 11 |

### KLASSIFIKATION DER ANMELDUNG (Int.Cl.3)

G 11 B 3/10

G 11 B 3/50

### RECHERCHIERTE SACHGEBIETE (Int. Cl.3)

G 11 B 3/00

### KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent-familie, übereinstimmendes Dokument

| X | Der vorliegende Recherchenbericht wurde für alle Patentansprüche erstellt. |
|---|---|

| Recherchenort <br> Berlin | Abschlußdatum der Recherche <br> 25-11-1980 | Prüfer <br> LEITHÄUSER |
|---|---|---|

EPA form 1503.1   06.78